# NEW EUROPEAN PATENT SPECIFICATION

(11) **EP 1 793 244 B2**
(45) Date of publication and mention of the opposition decision: **17.08.2022**
(45) Mention of the grant of the patent: 30.03.2016
(21) Application number: 06124313.5
(22) Date of filing: 17.11.2006
(51) Int. Cl.: G01V 8/20, G01V 15/00, F16P 3/14

(54) **System and method of automatically controlling temporary deactivation of a photoelectric barrier**
System und Verfahren zur automatischen Kontrolle der zeitweisen Deaktivierung einer Lichtschranke
Système et méthode pour le control automatique de la desactivation temporaire d'une barriere lumineuse

(30) Priority: 18.11.2005 IT BO20050700
(43) Date of publication of application: 06.06.2007
(73) Proprietor: Datalogic IP Tech S.r.l., Calderara di Reno (BO) (IT)
(72) Inventor: Lazzarin, Davide, 40133, BOLOGNA (IT); De Maria, Giuseppe, 40033, CASALECCHIO DI RENO (IT)
(74) Representative: Schohe, Stefan

(56) References cited:
- EP-A- 0 940 775
- EP-A2- 0 940 775
- WO-A1-91/13287
- DE-A1- 10 026 305
- DE-A1- 10 341 007
- DE-A1- 19 829 773
- DE-A1- 19 829 773
- DE-A1- 19 940 403
- DE-U1- 20 208 788
- DE-U1- 29 920 715
- JP-A- 1 064 022
- JP-A- S6 464 022
- US-A1- 2004 134 986
- US-A1- 2004 134 986
- US-A1- 2005 052 639
- US-A1- 2005 052 639

## Description

The present invention relates to a system and method of automatically controlling temporary deactivation of a photoelectric safety barrier. More specifically, the present invention relates to a system and method of controlling the "muting" or "blanking" function of a photoelectric safety barrier.

As is known, photoelectric safety barriers are photoelectric devices for detecting entry by a person or object inside a risk area, such as a machine or production equipment operating area, and which provide, when such entry is detected, for activating a number of operations designed to render the machinery or equipment in the risk area safe and so prevent potential conditions endangering the safety of the person or the integrity of the object entering the area.

Currently used photoelectric safety barriers typically comprise two posts located on the two opposite sides of the entrance to the risk area; and a number of light-emitting diodes (LEDs) located on a first of the posts to generate a light beam onto a number of photodiodes located on a second of the posts and which supply an electric signal indicating interruption of the light beam.

Photoelectric barriers also comprise a control unit, which processes the electric signals from the photodiodes to determine interruption of the beam by an "unauthorized" object or person passing through the entrance, and so activate the safety functions by which to render the machinery or equipment in the risk area safe.

As is also known, photoelectric barriers of the type described above must also be able to discriminate automatically between the presence at the entrance of a person or object "not authorized" to enter the risk area, and the presence at the entrance of an object or person "authorized" to enter the risk area, so as to only activate the safety functions upon detection of an unauthorized person or object, or deactivate the safety functions upon detection of an authorized person or object. For this purpose, photoelectric safety barriers are equipped with a control system implementing a so-called "muting function", which provides for temporarily deactivating the safety functions commanded by the photoelectric barrier, to allow "authorized" objects or persons through the barrier.

Control systems implementing the "muting function" normally comprise a number of photoelectric sensors located close to the controlled entrance, upstream from the photoelectric barrier. More specifically, the photoelectric sensors comprise a pair of light-emitting diodes located one after the other on one side of the path of the "authorized" object; and a pair of photodiodes located on the other side of the path and aligned with the relative emitting diodes.

In actual use, the photodiodes in the system detect interruption of the light beams by the authorized object approaching the entrance, and communicate this information to the control unit, which determines whether interruption of the light beams generated by the diodes has taken place in a predetermined orderly time sequence. If it has, the control unit commands temporary deactivation of the photoelectric safety barrier to allow the "authorized" object or person through the entrance. Deactivation of the barrier ceases when the object or person has crossed the barrier completely.

Though efficient, photoelectric safety barriers of the type described above have several drawbacks. Firstly, the photoelectric sensors of the system controlling activation of the muting function require the use of external electric connectors and cables, which, besides constituting undesired sources of "polluting" electromagnetic fields, clutter the area around the posts of the photoelectric barrier.

Secondly, the control system is not altogether dependable, and can be eluded by an unauthorized person passing through the entrance and interrupting the light beams, generated by the emitting diodes of the system, in the predetermined time sequence, thus endangering the person's safety. Moreover, the control system fails to operate correctly when detecting the presence at the entrance of objects made of material transparent to light, such as glass or transparent plastic material.

Finally, in many currently marketed photoelectric barriers, the photoelectric sensors of the control system comprise emitting diodes and photodiodes located on the same side and cooperating with a beam reflecting device on the opposite side; in which case, the control system fails to operate correctly when the object for detection has a fully reflecting outer surface, such as a steel or mirror surface, etc. In which case, the emitted beams are reflected completely by the outer surface of the object, thus resulting in the control system failing to command temporary deactivation of the photoelectric barrier, and therefore in improper operation of the barrier.

US-A-2005052639 discloses a light barrier arrangement for monitoring objects in a monitoring region, includes at least one transmitter for emitting light beams, at least one receiver for receiving the transmitted light beams, at least one evaluation unit for generating an object detection signal in dependence on received signals present at the receiver output and an interface for reading parameter values into the evaluation unit. The interface unit includes a transponder for providing a non-contracting input of parameter values into the evaluation unit mouse.

It is an object of the present invention to provide a system for automatically controlling temporary deactivation of a photoelectric safety barrier, designed to eliminate the aforementioned drawbacks.

According to the present invention, there is provided a system for automatically controlling temporary deactivation of a photoelectric safety barrier, as claimed in Claim 1 and, preferably, in any one of the following Claims depending directly or indirectly on Claim 1.

According to the present invention, there is provided a photoelectric safety barrier, as claimed in Claim 11.

Finally, according to the present invention, there is provided a method of automatically controlling temporary deactivation of a photoelectric safety barrier, as claimed in Claim 12 and, preferably, in any one of the following Claims depending directly or indirectly on Claim 12.

A non-limiting embodiment of the present invention will be described by way of example with reference to the accompanying drawings, in which:
Figure 1 shows, schematically, a system for automatically controlling temporary deactivation of a photoelectric safety barrier, in accordance with the teachings of the present invention;
Figure 2 shows, schematically, a flow chart of the operations performed by the Figure 1 system;
Figure 3 shows, schematically, an alternative embodiment of the system for automatically controlling temporary deactivation of a photoelectric safety barrier, according to the teachings of the present invention;
Figure 4 shows, schematically, a flow chart of the operations performed by the Figure 3 system.

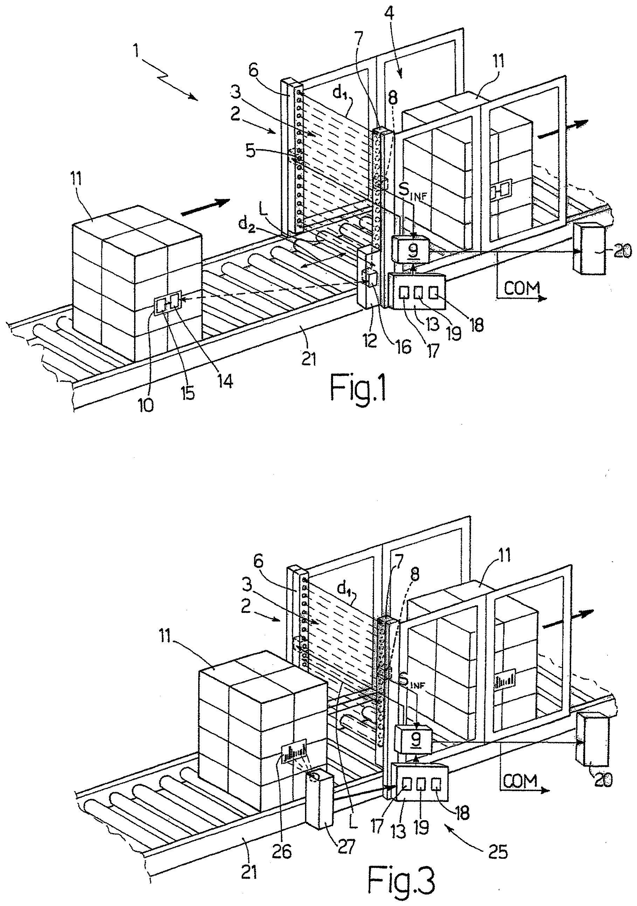

Number 1 in Figure 1 indicates as a whole a system for automatically controlling temporary deactivation of a photoelectric safety barrier 2.

Photoelectric barrier 2 is located at a passage or entrance 3 defined by a portion of the outer perimeter of a risk area 4, and provides for detecting passage through entrance 3 of a person or object "unauthorized" to enter risk area 4, so as to activate a number of safety functions by which to render risk area 4 "safe". Risk area 4 may be defined, for example, by a circumscribed area containing a mechanical actuating system, or a machine, or equipment (not shown).

In the Figure 1 example, photoelectric barrier 2 comprises two parallel posts located a given distance d₁ apart corresponding to the width L of controlled entrance 3; a number of optoelectronic emitting devices 5 housed on a first post 6 to emit light beams onto a second post 7; and a number of optoelectronic receiving devices 8 housed on the second post 7 to receive the light beams emitted by the corresponding emitting devices 5.

More specifically, emitting devices 5 may be defined by a number of light-emitting diodes (LEDs) spaced apart and aligned on first post 6 to emit light beams parallel to one another and to the portion defining entrance 3; and receiving devices 8 may be defined by a number of photodiodes, each located on second post 7 and aligned with a corresponding light-emitting diode, and each supplying an output signal S_{INF} indicating interruption (absence) of the light beam emitted by the corresponding light-emitting diode.

Photoelectric barrier 2 also comprises a control unit 9, which receives signals S_{INF} generated by optoelectronic receiving devices 8, and accordingly determines interruption of the beams by passage of an object 11 and/or person (not shown) through entrance 3. On determining passage through entrance 3, control unit 9 provides for activating the safety functions by which to render risk area 4 safe. In the example shown, the safety operations implemented by control unit 9 of photoelectric barrier 2 may comprise activating an acoustic or luminous warning device 20 indicating penetration of risk area 4 by the object and/or person. The safety operations may also comprise generating a number of electric signals COM controlling partial or total disabling of the mechanical systems, machinery, or equipment (not shown) inside risk area 4.

With reference to Figure 1, automatic control system 1 substantially comprises a number of identification devices 10, each of which is affixed to an object 11 or person (not shown) authorized to enter risk area 4, and contains an identification code associated with the object 11 or person. For the sake of simplicity, reference is made herein solely to the detection of objects 11, it being understood, however, that control system 1 also operates in exactly the same way to detect identification devices 10 affixed to persons.

Automatic control system 1 also comprises a reading device 12, which reads the identification code in each identification device 10 as the object 11 approaches entrance 3; and a processing device 13, which determines whether or not the identification code read by reading device 12 satisfies a predetermined authorization condition, and, if the condition is met, commands control unit 9 to perform the "muting function", i.e. to temporarily deactivate the safety functions implemented by photoelectric barrier 2. In other words, by implementing the muting function, control unit 9 disables all the light beams emitted by emitting devices 5, to permit passage of the object through the entrance without activating the safety functions.

In the Figure 1 example, identification device 10 is located firmly on object 11, and comprises a transponder (TAG) containing the identification code, and which is capable of transmitting, on command, a radiofrequency identification signal containing the memorized identification code. Though shown affixed to an object 11 in Figure 1, identification device 10 may obviously also be worn or carried by a person.

The transponder (TAG) may preferably, though not necessarily, be a passive type, i.e. with no power batteries, and, as shown schematically in Figure 1, comprises a radiofrequency transmitting-receiving circuit 14, and a memory circuit 15 connected to transmitting-receiving circuit 14 and containing the identification code. The transponder is a known device and therefore not described in detail.

Reading device 12 may preferably, though not necessarily, be located at photoelectric barrier 2, along the path of object 11, to receive the identification signal, transmitted by identification device 10, as respective object 11 nears entrance 3.

In the Figure 1 example, reading device 12 is located outside photoelectric barrier 2, at and a predetermined distance from entrance 3.

It should be pointed out that, in an alternative embodiment, reading device 12 may be integrated directly inside a post of photoelectric barrier 2.

In the Figure 1 example, reading device 12 comprises a transmitting-receiving module 16, which transmits a radiofrequency interrogation signal to identification device 10 to activate it and receive the identification signal from it. Radiofrequency signal exchange between reading device 12 and identification devices 10 may preferably be short-range, so that the identification code of object 11 is recognized when the object is a predetermined minimum distance d₂ from photoelectric barrier 2.

Processing device 13 cooperates with reading device 12 to receive the identification code reading from the reading device, and determines whether or not the code satisfies a predetermined condition authorizing passage of object 11 through entrance 3.

More specifically, processing device 13 comprises a memory module 17 containing one or more predetermined identification codes associated with objects (or persons) "authorized" to pass through entrance 3; a comparing module 18 for determining whether or not the identification code reading matches a corresponding memorized identification code; and a control module 19 for commanding control unit 9 to perform the muting function, i.e. to temporarily disable the safety functions implemented by photoelectric barrier 2.

In an alternative embodiment, the identification code comprises an alphanumeric code; and processing device 13 implements a mathematical algorithm, which processes the identification code to give a numeric result, and determines, at the end of such processing, whether or not the numeric result obtained satisfies a given mathematical relationship with a predetermined numeric value.

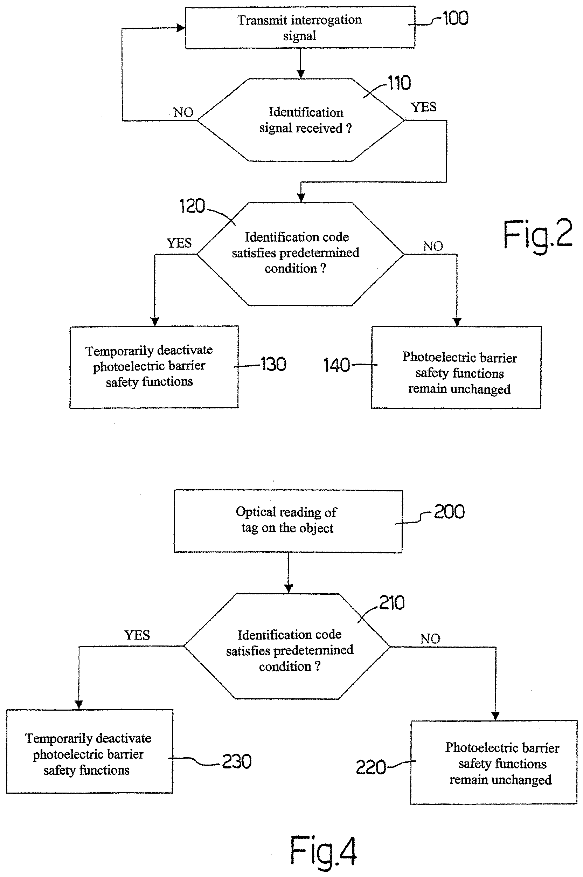

Figure 2 shows a flow chart of the operations performed by control system 1, and in which each object 11 is assumed to move towards entrance 3 of photoelectric barrier 2 on a known linear conveyor 21. To begin with, reading device 12 transmits the interrogation signal (block 100), waits for an identification signal of an object 11 (block 110), and, if no identification signal is received (NO output of block 110), transmits another interrogation signal.

At this step, identification device 10, i.e. the transponder, on receiving the interrogation signal, is activated and transmits the identification signal containing its identification code memorized in memory module 17.

At this point, reading device 12 receives the identification signal (YES output of block 110), and processing device 13 determines whether or not the identification code satisfies the predetermined condition (block 120). At this step, as stated above, the predetermined condition may be met by the identification code matching an identification code in memory module 17.

In the event of a negative response (NO output of block 120), i.e. the identification code fails to satisfy the predetermined condition, processing device 13 activates no control over photoelectric barrier 2, which therefore continues operating in such a manner as to activate the safety functions when the object passes through photoelectric barrier 2 (block 140).

Conversely, in the event the identification code satisfies the predetermined condition, i.e. processing device 13 recognizes an "authorized" object about to pass through entrance 3 (YES output of block 120), processing device 13 activates the "muting function", i.e. transmits the control signal to control unit 9 to temporarily disable the safety functions implemented by photoelectric barrier 2 (block 130). The muting function is maintained active by processing device 13 for a predetermined time interval long enough to allow object 11 to pass completely through entrance 3.

It should be pointed out that, in a system or method that is not part of the claimed invention, the muting function may be deactivated by a device (not shown) capable of determining when object 11 has passed completely through photoelectric barrier 2. More specifically, the system may comprise a detecting device comprising one or more sensors located downstream from photoelectric barrier 2.

The identification code identifying object 11 or the person may preferably, though not necessarily, contain information indicating the deactivation time interval of photoelectric barrier 2. Control module 19 can therefore modify the deactivation time interval of photoelectric barrier 2 as a function of the identification code associated with object 11 or the person.

The identification code identifying object 11 or the person may also preferably, though not necessarily, contain information indicating the dimensions (width, length, height) of the object. Which information can be processed by control module 19 to accordingly determine the deactivation time interval. For example, the deactivation time interval may be determined as a function of the length of the object appropriately coded in the identification code.

Control module 19 is also preferably, though not necessarily, able to process the object dimension information to activate a "blanking function", which provides for disabling a given number of beams to only allow objects of a given height through the entrance, while maintaining the other beams active, which thus continue to perform the safety function of the photoelectric barrier.

In this case, the identification code may contain the height of the "authorized" object, and, once the code is read and, hence, the height determined, control unit 9 disables emission-reception of the beams extending along the posts up to a height equal to the height reading. Control unit 9 thus temporarily disables detection of objects passing through the bottom portion of the beams up to a height, measured with respect to a supporting surface of the object (e.g. the conveying surface of a linear conveyor), less than or equal to the height in the identification code, and, at the same time, maintains detection of objects which, as they pass through the entrance, interrupt the top portion of the beams emitted at a height greater than the height in the identification code.

This has the advantage of improving the safety of photoelectric barrier 2, in that the muting function is only applied temporarily to the bottom portion of entrance 3, through which the "authorized" object actual passes, while the top portion of entrance 3 is "controlled" constantly and so activates the safety functions whenever an object passes through it.

The advantages of control system 1 as described above are obvious : above all, no photoelectric sensors are required to activate the muting function, which has the obvious advantages of reducing the manufacturing cost of photoelectric barrier 2, and of eliminating electromagnetic pollution caused by the cables and electric wiring connecting the photoelectric sensors.

The safety and reliability of photoelectric barrier 2 are also improved : in fact, unlike known systems, in which the muting (or blanking) function is activated on the basis of information indicating the presence/absence of an object 11 passing through photoelectric barrier 2, and on the basis of the time sequence in which the beams are interrupted by object 11, system 1 as described above is extremely safe and flexible, by only activating the muting function upon recognition of the specific identification code associated with object 11 or the person, thus eliminating any possibility of the muting function being activated wrongly.

Moreover, control system 1 as described above is able to control photoelectric barrier 2 regardless of the material the controlled object 11 is made of. In fact, control system 1 is able to activate the muting function even when dealing with objects made of transparent or fully reflecting material.

Clearly, changes may be made to the control system as described and illustrated herein without, however, departing from the scope of the present invention, as defined in the accompanying Claims.

The Figure 3 embodiment relates to a control system 25, which is similar to control system 1, and the component parts of which are indicated, where possible, using the same reference numbers as for the corresponding parts of control system 1.

As opposed to "radiofrequency reading", control system 25 provides for optical reading of the identification code of object 11. Control system 25 therefore differs from control system 1, by the identification device 26 comprising, as opposed to a transponder, a plate or tag made of paper, plastic, or any other similar material, and on which the identification code of object 11 is indicated; and the reading device 27 provides for optically reading the identification code printed on the tag.

More specifically, in the Figure 3 example, the tag is located on object 11 so that the identification code is visible from the outside, and the identification code is defined by a bar code. Reading device 27 comprises a known optical reader, which reads the bar code printed on the tag and transmits it to control module 19, which determines whether or not the identification code reading satisfies a predetermined condition, and, if it does, deactivates the safety functions of photoelectric barrier 2.

The optical reader of reading device 27 may be integrated directly inside one of the two posts of the photoelectric barrier, or may be located upstream from the photoelectric barrier, at a predetermined distance from entrance 3 (Figure 3).

With reference to Figure 4, in actual use, as object 11 approaches entrance 3, the optical reader reads the bar code printed on tag 26 affixed to object 11 (block 200). Processing device 13 then determines whether or not the code satisfies the predetermined condition. At this step, as stated above, the predetermined condition may be satisfied by the identification code matching a code in memory module 17 (block 210).

In the event of a negative response (NO output of block 210), i.e. the identification code fails to satisfy the predetermined condition, processing device 13 activates no control over photoelectric barrier 2, which therefore continues to operate in such a manner as to activate the safety functions when the beams are interrupted (block 220).

Conversely, in the event the identification code satisfies the predetermined condition (YES output of block 210), i.e. processing device 13 recognizes an "authorized" object about to pass through entrance 3, processing device 13 activates the "muting function", i.e. transmits the control signal to control unit 9 to temporarily disable the safety functions implemented by photoelectric barrier 2 (block 230).

## Claims

1. A system (1) (25) for automatically controlling temporary deactivation of a photoelectric safety barrier (2) located at an entrance (3) to a given risk area (4) to determine passage of an object (11) or a person through the entrance (3), so as to activate a number of predetermined safety functions; the system (1) (25) being **characterized by** comprising:
- an identification device (10)(26), which is affixed to an object (11) or a person authorized to enter said risk area (4), and contains an identification code associated with said object (11) or said person to which it is affixed;
- reading means (12) (27) located at said entrance (3) to read the identification code in said identification device (10), when said object (11) or said person to which said identification device (10) is affixed, is located a predetermined distance from the entrance (3) of the photoelectric barrier (2), prior to passing through the entrance (3);
- processing means (13) which, when the identification code reading satisfies a predetermined condition, deactivate for a predetermined time interval the safety functions implemented by said photoelectric barrier (2); said predetermined condition authorizing passage of said object (11) or said person through said entrance (3).

2. A system as claimed in Claim 1, **characterized in that** said identification device (10) comprise a transponder, which transmits to said reading means (12) a radiofrequency identification signal containing the identification code.

3. A system as claimed in Claim 2, **characterized in that** said reading means (12) comprise transmitting-receiving means (16), which receive and transmit said identification signal containing said identification code to said processing means (13).

4. A system as claimed in Claim 3, **characterized in that** said processing means (13) comprise memory means (17) containing at least one predetermined identification code associated with objects (11) or persons authorized to pass through said entrance (3); said predetermined condition being satisfied when the identification code reading satisfies a predetermined relationship with said at least one predetermined identification code.

5. A system as claimed in Claim 1, **characterized in that** said identification device (26) comprise at least one tag, on which said identification code is visibly indicated; said reading means (27) comprising an optical reader for reading the identification code indicated on said tag.

6. **A** system as claimed in Claim 5, **characterized in that** said identification code comprises a bar code, and said optical reader comprises a bar-code reader.

7. A system as claimed in any one of the foregoing Claims, **characterized in that** said processing means (13) provide for varying, as a function of information contained in said identification code reading, said time interval in which the safety functions implemented by said photoelectric barrier (2) are deactivated.

8. A system as claimed in any one of the foregoing Claims, **characterized in that** said photoelectric barrier (2) comprises optoelectronic emitting means (5) for emitting light beams parallel to said entrance (3); optoelectronic receiving means (8), which receive said light beams and generate a first electric signal indicating interruption of said light beams by an object (11) or person passing through the entrance (3); and control means (9), which process said first electric signal to determine passage of an object (11) or person through the entrance (3) of the photoelectric barrier (2) and so activate said safety functions.

9. A system as claimed in Claim 8, **characterized in that** said processing means (13) provide for temporarity deactivating detection of said object (11) which, as it passes through said entrance (3), interrupts a portion of the light beams emitted by said photoelectric barrier(2); said processing means (13) modifying a dimension of the non-detectable said portion of the light beams as a function of information contained in said identification code.

10. A system as claimed in Claim 9, **characterized in that** said portion of the light beams comprises a number of light beams; said processing means (13) varying the number of non-detectable light beams as a function of a dimension contained in said identification code.

11. A photoelectric barrier (2) installable at an entrance (3) to a given risk area (4) to determine passage of an object (11) or a person through the entrance (3), and to activate a number of predetermined safety functions upon determining passage through the entrance (3); said photoelectric barrier (2) comprising a control system (1)(25) for automatically controlling temporary deactivation of the safety functions implemented by said photoelectric barrier (2); and said photoelectric barrier (2) being **characterized in that** said control system (1) (25) is as claimed in any one of Claims 1 to 10.

12. A method of automatically controlling temporary deactivation of a photoelectric safety barrier (2) located at an entrance (3) to a given risk area (4) to determine passage of an object (11) or a person through the entrance (3), and to activate a number of predetermined safety functions upon determining said passage; said method being **characterized by** comprising the steps of:
- fixing an identification device (10) (26) to an object (11) or person authorized to enter sais risk area (4); said identification device (10) (26) containing an identification code associated with the object (11) or the person to which it is attached;
- determining (100, 110)(200,210) the identification code in said identification device (10) (26) by means of reading means (12)(27), when said object (11) or person to which said identification device (10) is affixed, is located a predetermined distance from the entrance (3) of the photoelectric barrier (2), prior to passing through said entrance (3);
- deactivating (130)(230) said safety functions, implemented by said photoelectric barrier (2), for a predetermined time interval when the identification code reading satisfies a predetermined condition; said predetermined condition authorizing passage of said object (11) or said person through said entrance (3).

13. A method as claimed in Claim 12, **characterized in that** said step of determining (100, 110)(200, 210) the identification code in said identification device (10)(26) comprises the step of transmitting a radiofrequency identification signal containing said identification code to said reading means (12) by means of said identification device (10).

14. A method as claimed in Claim 13, **characterized by** comprising the step of receiving said radiofrequency identification signal by means of said reading means (12) to determine said identification code; determining (120) whether said identification code satisfies said predetermined condition; and deactivating the safety functions, implemented by said photoelectric barrier (2), for a predetermined time interval (130) when said predetermined condition is satisfied.

15. A method as claimed in Claim 12, c comprising the step of fixing to said object (11) a tag on which said identification code is indicated; and optically reading said identification code indicated on said tag.

16. A method as claimed in any one of Claims 12 to 15, **characterized by** comprising the step of varying said time interval, in which the safety functions implemented by said photoelectric barrier (2) are deactivated, as a function of information contained in said identification code reading.

17. A method as claimed in any one of Claims 12 to 16, wherein said photoelectric barrier (2) comprises optoelectronic emitting means (5) for emitting light beams parallel to said entrance (3); optoelectronic receiving means (8), which receive said light beams and generate a first electric signal indicating interruption of said light beams caused by passage through the entrance (3); and control means (9), which process said first electric signal to determine passage through the entrance (3) and so activate said safety functions; said method being **characterized by** comprising the step of temporarily deactivating detection, by said photoelectric barrier (2), of a object (11) which, as it passes through said entrance (3), interrupts a portion of the light beams emitted by the photoelectric barrier (2); and modifying a dimension of the non-detectable said portion of the light beams as a function of information contained in said identification code.

18. A method as claimed in Claim 17, wherein said portion of the light beams comprises a number of light beams; said method being **characterized in that** said step of varying a dimension of said non-detectable portion comprises the step of varying the number of non-detectable light beams as a function of a dimension coded in said identification code.

## Patentansprüche

1. System (1) (25) zum automatischen Steuern einer temporären Deaktivierung einer photoelektrischen Sicherheitsschranke (2), die sich an einem Eingang (3) zu einem bestimmten Risikobereich (4) zwecks Feststellung des Hindurchtretens eines Objekts (11) oder einer Person durch den Eingang (3) befindet, um eine Reihe von vorher festgelegten Sicherheitsfunktionen zu aktivieren; wobei das System (1) (25) **dadurch gekennzeichnet ist, dass** es Folgendes umfasst:
- eine Identifikationsvorrichtung (10) (26), die an einem Objekt (11) oder einer Person befestigt ist, welches bzw. welche dazu befugt ist, in den Risikobereich (4) einzutreten, und die einen Identifikationscode enthält, der dem Objekt (11) oder der Person zugewiesen ist, an dem bzw. an der sie befestigt ist;
- Lesemittel (12) (27) an dem Eingang (3) zum Lesen des Identifikationscodes in der Identifikationsvorrichtung (10), wenn das Objekt (11) oder die Person, an der die Identifikationsvorrichtung (10) befestigt ist, sich vor dem Hindurchgehen durch den Eingang (3) in einem vorher festgelegten Abstand von dem Eingang (3) der photoelektrischen Schranke (2) befindet;
- Verarbeitungsmittel (13), das, wenn der Identifikationcode-Messwert einen vorher festgelegten Zustand erfüllt, die Sicherheitsfunktionen, die durch die photoelektrische Schranke (2) umgesetzt werden, für ein vorher festgelegtes Zeitintervall deaktiviert; wobei der vorher festgelegte Zustand ein Hindurchtreten des Objekts (11) oder der Person durch den Eingang (3) erlaubt.

2. System nach Anspruch 1, **dadurch gekennzeichnet, dass** die Identifikationsvorrichtung (10) einen Transponder umfasst, der ein Hochfrequenz-Identifikationssignal, welches den Identifikationscode umfasst, an das Lesemittel (12) sendet.

3. System nach Anspruch 2, **dadurch gekennzeichnet, dass** das Lesemittel (12) ein Sende-Empfangsmittel (16) umfasst, welches das Identifikationssignal, das den Identifikationscode umfasst, empfängt und an das Verarbeitungsmittel (13) sendet.

4. System nach Anspruch 3, **dadurch gekennzeichnet, dass** das Verarbeitungsmittel (13) ein Speichermittel (17) umfasst, das mindestens einen vorher festgelegten Identifikationscode enthält, der Objekten (11) oder Personen zugewiesen ist, die zum Hindurchtreten durch den Eingang (3) befugt sind; wobei der vorher festgelegte Zustand erfüllt ist, wenn der Identifikationscode-Messwert ein vorher festgelegtes Verhältnis zu dem mindestens einen vorher festgelegten Identifikationscode erfüllt.

5. System nach Anspruch 1, **dadurch gekennzeichnet, dass** die Identifikationsvorrichtung (26) mindestens ein Anhängeschild umfasst, auf dem der Identifikationscode sichtbar angegeben ist; wobei das Lesemittel (27) ein optisches Lesegerät zum Ablesen des auf dem Anhängeschild angegebenen Identifikationscodes umfasst.

6. System nach Anspruch 5, **dadurch gekennzeichnet, dass** der Identifikationscode einen Strichcode umfasst und das optische Lesegerät ein Strichcodelesegerät umfasst.

7. System nach einem der vorstehenden Ansprüche, **dadurch gekennzeichnet, dass** das Verarbeitungsmittel (13) als eine Funktion der in dem Identifikationscode-Messwert enthaltenen Informationen ein Variieren des Zeitintervalls bereitstellt, in dem die Sicherheitsfunktionen, die durch die photoelektrische Schranke (2) umgesetzt werden, deaktiviert werden.

8. System nach einem der vorstehenden Ansprüche, **dadurch gekennzeichnet, dass** die photoelektrische Schranke (2) Folgendes umfasst: optoelektronische Lichtemittiermittel (5) zum Emittieren von Lichtstrahlen, die parallel zum Eingang (3) verlaufen; optoelektronische Empfangsmittel (8), die die Lichtstrahlen empfangen und ein erstes elektrisches Signal erzeugen, das eine Unterbrechung der Lichtstrahlen durch ein Objekt (11) oder eine Person, das bzw. die durch den Eingang (3) hindurch tritt, anzeigt; und Steuermittel (9), die das erste elektrische Signal verarbeiten, um ein Hindurchtreten eines Objekts (11) oder einer Person durch den Eingang (3) der photoelektrischen Schranke (2) festzustellen und somit die Sicherheitsfunktionen zu aktivieren.

9. System nach Anspruch 8, **dadurch gekennzeichnet, dass** das Verarbeitungsmittel (13) für eine temporäre Deaktivierung der Erkennung des Objekts (11) sorgt, das während des Hindurchtretens durch den Eingang (3) einen Teil der durch die photoelektrische Schranke (2) abgegebenen Lichtstrahlen unterbricht; wobei das Verarbeitungsmittel (13) eine Dimension des nicht erkennbaren Teils der Lichtstrahlen als eine Funktion der in dem Identifikationscode enthaltenen Informationen modifiziert.

10. System nach Anspruch 9, **dadurch gekennzeichnet, dass** der Teil der Lichtstrahlen eine Anzahl an Lichtstrahlen umfasst; wobei das Verarbeitungsmittel (13) die Anzahl an nicht erkennbaren Lichtstrahlen als eine Funktion einer in dem Identifikationscode enthaltenen Dimension variiert.

11. Photoelektrische Schranke (2), die an einem Eingang (3) zu einem bestimmten Risikobereich (4) installiert werden kann, um das Hindurchtreten eines Objekts (11) oder einer Person durch den Eingang (3) festzustellen und um eine Anzahl an vorher festgelegten Sicherheitsfunktionen beim Feststellen eines Hindurchtretens durch den Eingang (3) zu aktivieren; wobei die photoelektrische Schranke (2) ein Steuersystem (1) (25) zum automatischen Steuern einer temporären Deaktivierung der durch die photoelektrische Schranke (2) umgesetzten Sicherheitsfunktionen umfasst; und wobei die photoelektrische Schranke (2) **dadurch gekennzeichnet ist, dass** das Steuersystem (1) (25) die in einem der Ansprüche 1 bis 10 beanspruchten Eigenschaften besitzt.

12. Verfahren zum automatischen Steuern einer temporären Deaktivierung einer photoelektrischen Sicherheitsschranke (2) an einem Eingang (3) zu einem bestimmten Risikobereich (4) zum Feststellen des Hindurchtretens eines Objekts (11) oder einer Person durch den Eingang (3) und zum Aktivieren einer Reihe von vorher festgelegten Sicherheitsfunktionen bei Feststellen des Hindurchtretens; wobei das Verfahren **dadurch gekennzeichnet ist, dass** es folgende Schritte umfasst:
- das Befestigen einer Identifikationsvorrichtung (10) (26) an einem Objekt (11) oder einer Person, welches bzw. welche dazu befugt ist, in den Risikobereich (4) einzutreten; wobei die Identifikationsvorrichtung (10) (26) einen Identifikationscode enthält, der dem Objekt (11) oder der Person zugewiesen ist, an dem bzw. an der sie befestigt ist;
- das Ermitteln (110, 110) (200, 210) des Identifikationscodes in der Identifikationsvorrichtung (10) (26) durch das Lesemittel (12) (27), wenn das Objekt (11) oder die Person, an der die Identifikationsvorrichtung (10) befestigt ist, sich vor dem Hindurchgehen durch den Eingang (3) in einem vorher festgelegten Abstand von dem Eingang (3) der photoelektrischen Schranke (2) befindet;
- das Deaktivieren (130) (230) der Sicherheitsfunktionen, die durch die photoelektrische Schranke (2) umgesetzt werden, für ein vorher festgelegtes Zeitintervall, wenn der Identifikationscode-Messwert einen vorher festgelegten Zustand erfüllt; wobei der vorher festgelegte Zustand das Hindurchtreten des Objekts (11) oder der Person durch den Eingang (3) erlaubt.

13. Verfahren nach Anspruch 12, **dadurch gekennzeichnet, dass** der Schritt des Ermittelns (100, 110) (200, 210) des Identifikationscodes in der Identifikationsvorrichtung (10) (26) den Schritt einer Übertragung eines Hochfrequenz-Identifikationssignals, das den Identifikationscode enthält, durch die Identifikationsvorrichtung (10) an das Lesemittel (12) umfasst.

14. Verfahren nach Anspruch 13, **gekennzeichnet durch** den Schritt des Empfangens des Hochfrequenz-Identifikationssignals durch das Lesemittel (12) zum Ermitteln des Identifikationscodes; das Feststellen (120), ob der Identifikationscode den vorher festgelegten Zustand erfüllt; und das Deaktivieren der Sicherheitsfunktionen, die durch die photoelektrische Schranke (2) umgesetzt werden, für ein vorher festgelegtes Zeitintervall (130), wenn der vorher festgelegte Zustand erfüllt ist.

15. Verfahren nach Anspruch 12, das den Schritt eines Befestigens eines Anhängeschilds, auf dem der Identifikationscode angegeben ist, an dem Objekt (11) umfasst; und das optische Ablesen des auf dem Hängeschild angegebenen Identifikationscodes.

16. Verfahren nach einem der Ansprüche 12 bis 15, **dadurch gekennzeichnet, dass** es den Schritt eines Variierens des Zeitintervalls, in dem die durch die photoelektrische Schranke (2) umgesetzten Sicherheitsfunktionen deaktiviert werden, als eine Funktion der in dem Identifikationscode-Messwert enthaltenen Informationen umfasst.

17. Verfahren nach einem der Ansprüche 12 bis 16, wobei die photoelektrische Schranke (2) Folgendes umfasst: optoelektronische Lichtemittiermittel (5) zum Emittieren von Lichtstrahlen, die parallel zum Eingang (3) verlaufen; optoelektronische Empfangsmittel(8), welche die Lichtstrahlen empfangen und ein erstes elektrisches Signal erzeugen, das eine durch das Hindurchtreten durch den Eingang (3) verursachte Unterbrechung der Lichtstrahlen anzeigt; und Steuermittel (9), die das erste elektrische Signal verarbeiten, um ein Hindurchtreten durch den Eingang (3) zu ermitteln und somit die Sicherheitsfunktionen zu aktivieren; wobei das Verfahren **dadurch gekennzeichnet ist, dass** es den Schritt eines temporären Deaktivierens des Erkennens, durch die photoelektrische Schranke (2), eines Objekts (11), welches während seines Hindurchtretens durch den Eingang (3) einen Teil der durch die photoelektrische Schranke (2) emittierten Lichtstrahlen unterbricht; und das Modifizieren einer Dimension des nicht erkennbaren Teils der Lichtstrahlen als eine Funktion der in dem Identifikationscode enthaltenen Informationen umfasst.

18. Verfahren nach Anspruch 17, wobei der Teil der Lichtstrahlen eine Anzahl an Lichtstrahlen umfasst; wobei das Verfahren **dadurch gekennzeichnet ist, dass** der Schritt des Variierens einer Dimension des nicht erkennbaren Teils den Schritt des Variierens der Anzahl an nicht erkennbaren Lichtstrahlen als eine Funktion einer in dem Identifikationscode enthaltenen Dimension umfasst.

## Revendications

1. Système (1) (25) pour commander automatiquement la désactivation temporaire d'une barrière de sécurité photoélectrique (2) située au niveau d'une entrée (3) d'une zone à risque donnée (4) pour déterminer le passage d'un objet (11) ou d'une personne à travers l'entrée (3), de manière à activer un certain nombre de fonctions de sécurité prédéterminées ; le système (1) (25) étant **caractérisé en ce qu'**il comprend :
- un dispositif d'identification (10) (26), qui est fixé à un objet (11) ou à une personne autorisé(e) à pénétrer dans ladite zone à risque (4), et contient un code d'identification associé audit objet (11) ou à ladite personne auquel/à laquelle il est fixé ;
- des moyens de lecture (12) (27) situés au niveau de ladite entrée (3) pour lire le code d'identification dans ledit dispositif d'identification (10), lorsque ledit objet (11) ou ladite personne auquel/à laquelle ledit dispositif d'identification (10) est fixé est situé(e) à une distance prédéterminée de l'entrée (3) de la barrière photoélectrique (2), avant de passer à travers l'entrée (3) ;
- des moyens de traitement (13) qui, lorsque la lecture du code d'identification satisfait une condition prédéterminée, désactivent pendant un intervalle de temps prédéterminé les fonctions de sécurité mises en œuvre par ladite barrière photoélectrique (2) ; ladite condition prédéterminée autorisant le passage dudit objet (11) ou de ladite personne à travers ladite entrée (3).

2. Système selon la revendication 1, **caractérisé en ce que** ledit dispositif d'identification (10) comprend un transpondeur, qui transmet auxdits moyens de lecture (12) un signal d'identification par radiofréquence contenant le code d'identification.

3. Système selon la revendication 2, **caractérisé en ce que** lesdits moyens de lecture (12) comprennent des moyens d'émission-réception (16), qui reçoivent et transmettent ledit signal d'identification contenant ledit code d'identification auxdits moyens de traitement (13).

4. Système selon la revendication 3, **caractérisé en ce que** lesdits moyens de traitement (13) comprennent des moyens de mémoire (17) contenant au moins un code d'identification prédéterminé associé à des objets (11) ou à des personnes autorisé(e)s à passer à travers ladite entrée (3) ; ladite condition prédéterminée étant satisfaite lorsque la lecture du code d'identification satisfait une relation prédéterminée avec ledit au moins un code d'identification prédéterminé.

5. Système selon la revendication 1, **caractérisé en ce que** ledit dispositif d'identification (26) comprend au moins une étiquette sur laquelle ledit code d'identification est indiqué de façon visible ; lesdits moyens de lecture (27) comprenant un lecteur optique pour lire le code d'identification indiqué sur ladite étiquette.

6. Système selon la revendication 5, **caractérisé en ce que** ledit code d'identification comprend un code-barres, et ledit lecteur optique comprend un lecteur de code-barres.

7. Système selon l'une quelconque des revendications précédentes, **caractérisé en ce que** lesdits moyens de traitement (13) servent à faire varier, en fonction d'informations contenues dans la lecture dudit code d'identification, ledit intervalle de temps pendant lequel les fonctions de sécurité mises en oeuvre par ladite barrière photoélectrique (2) sont désactivées.

8. Système selon l'une quelconque des revendications précédentes, **caractérisé en ce que** ladite barrière photoélectrique (2) comprend des moyens d'émission optoélectroniques (5) pour émettre des faisceaux lumineux parallèles à ladite entrée (3) ; des moyens de réception optoélectroniques (8), qui reçoivent lesdits faisceaux lumineux et génèrent un premier signal électrique indiquant l'interruption desdits faisceaux lumineux par un objet (11) ou une personne passant à travers l'entrée (3) ; et des moyens de commande (9), qui traitent ledit premier signal électrique pour déterminer le passage d'un objet (11) ou d'une personne à travers l'entrée (3) de la barrière photoélectrique (2) et ainsi activer lesdites fonctions de sécurité.

9. Système selon la revendication 8, **caractérisé en ce que** lesdits moyens de traitement (13) servent à désactiver temporairement la détection dudit objet (11) qui, là mesure qu'il passe à travers ladite entrée (3), interrompt une partie des faisceaux lumineux émis par ladite barrière photoélectrique (2); lesdits moyens de traitement (13) modifiant une dimension de ladite partie non détectable des faisceaux lumineux en fonction d'informations contenues dans ledit code d'identification.

10. Système selon la revendication 9, **caractérisé en ce que** ladite partie des faisceaux lumineux comprend un certain nombre de faisceaux lumineux ; lesdits moyens de traitement (13) faisant varier le nombre de faisceaux lumineux non détectables en fonction d'une dimension contenue dans ledit code d'identification.

11. Barrière photoélectrique (2) pouvant être installée au niveau d'une entrée (3) d'une zone à risque donnée (4) pour déterminer le passage d'un objet (11) ou d'une personne à travers l'entrée (3), et pour activer un certain nombre de fonctions de sécurité prédéterminées lors de la détermination d'un passage à travers l'entrée (3); ladite barrière photoélectrique (2) comprenant un système de commande (1) (25) pour commander automatiquement la désactivation temporaire des fonctions de sécurité mises en oeuvre par ladite barrière photoélectrique (2) ; et ladite barrière photoélectrique (2) étant **caractérisée en ce que** ledit système de commande (1) (25) est tel que revendiqué dans l'une quelconque des revendications 1 à 10.

12. Procédé de commande automatique de la désactivation temporaire d'une barrière de sécurité photoélectrique (2) située au niveau d'une entrée (3) d'une zone à risque donnée (4) pour déterminer le passage d'un objet (11) ou d'une personne à travers l'entrée (3), et pour activer un certain nombre de fonctions de sécurité prédéterminées lors de la détermination dudit passage ; ledit procédé étant **caractérisé en ce qu'**il comprend les étapes consistant à :
- fixer un dispositif d'identification (10) (26) à un objet (11) ou à une personne autorisé(e) à pénétrer dans ladite zone à risque (4) ; ledit dispositif d'identification (10) (26) contenant un code d'identification associé à l'objet (11) ou à la personne auquel/à laquelle il est fixé ;
- déterminer (100, 110) (200, 210) le code d'identification dans ledit dispositif d'identification (10) (26) à l'aide de moyens de lecture (12) (27), lorsque ledit objet (11) ou ladite personne auquel/à laquelle ledit dispositif d'identification (10) est fixé se trouve à une distance prédéterminée de l'entrée (3) de la barrière photoélectrique (2), avant de passer à travers ladite entrée (3) ;
- désactiver (130) (230) lesdites fonctions de sécurité mises en oeuvre par ladite barrière photoélectrique (2) pendant un intervalle de temps prédéterminé lorsque la lecture du code d'identification satisfait une condition prédéterminée ; ladite condition prédéterminée autorisant le passage dudit objet (11) ou de ladite personne à travers ladite entrée (3).

13. Procédé selon la revendication 12, **caractérisé en ce que** ladite étape de détermination (100, 110) (200, 210) du code d'identification dans ledit dispositif d'identification (10) (26) comprend l'étape consistant à transmettre un signal d'identification par radiofréquence contenant ledit code d'identification auxdits moyens de lecture (12) au moyen dudit dispositif d'identification (10).

14. Procédé selon la revendication 13, **caractérisé en ce qu'**il comprend l'étape consistant à recevoir ledit signal d'identification par radiofréquence au moyen desdits moyens de lecture (12) pour déterminer ledit code d'identification ; déterminer (120) si ledit code d'identification satisfait ladite condition prédéterminée ; et désactiver les fonctions de sécurité mises en oeuvre par ladite barrière photoélectrique (2) pendant un intervalle de temps prédéterminé (130) lorsque ladite condition prédéterminée est satisfaite.

15. Procédé selon la revendication 12, comprenant l'étape consistant à fixer audit objet (11) une étiquette sur laquelle ledit code d'identification est indiqué ; et lire optiquement ledit code d'identification indiqué sur ladite étiquette.

16. Procédé selon l'une quelconque des revendications 12 à 15, **caractérisé en ce qu'**il comprend l'étape consistant à faire varier ledit intervalle de temps pendant lequel les fonctions de sécurité mises en oeuvre par ladite barrière photoélectrique (2) sont désactivées, en fonction d'informations contenues dans ladite lecture du code d'identification.

17. Procédé selon l'une quelconque des revendications 12 à 16, dans lequel ladite barrière photoélectrique (2) comprend des moyens d'émission optoélectroniques (5) pour émettre des faisceaux lumineux parallèles à ladite entrée (3) ; des moyens de réception optoélectroniques (8), qui reçoivent lesdits faisceaux lumineux et génèrent un premier signal électrique indiquant l'interruption desdits faisceaux lumineux provoquée par un passage à travers l'entrée (3) ; et des moyens de commande (9), qui traitent ledit premier signal électrique pour déterminer le passage à travers l'entrée (3) et ainsi activer lesdites fonctions de sécurité ; ledit procédé étant **caractérisé en ce qu'**il comprend l'étape consistant à désactiver temporairement la détection, par ladite barrière photoélectrique (2), d'un objet (11) qui, lorsqu'il passe à travers ladite entrée (3), interrompt une partie des faisceaux lumineux émis par la barrière photoélectrique (2); et modifier une dimension de ladite partie non détectable des faisceaux lumineux en fonction d'informations contenues dans ledit code d'identification.

18. Procédé selon la revendication 17, dans lequel ladite partie des faisceaux lumineux comprend un certain nombre de faisceaux lumineux ; ledit procédé étant **caractérisé en ce que** ladite étape consistant à faire varier une dimension de ladite partie non détectable comprend l'étape consistant à faire varier le nombre de faisceaux lumineux non détectables en fonction d'une dimension codée dans ledit code d'identification.
